# FASCICULE DE BREVET EUROPEEN

(11) **EP 3 743 313 B1**
(45) Date de publication et mention de la délivrance du brevet: **28.12.2022**
(21) Numéro de dépôt: 19710022.5
(22) Date de dépôt: 25.01.2019
(51) Int. Cl.: B60R 9/04

(54) **DISPOSITIF DE SUPPORT D'UNE BARRE DE TOIT**
DACHSTREBENSTÜTZVORRICHTUNG
ROOF BAR SUPPORT DEVICE

(30) Priorité: 26.01.2018 FR 1850637
(43) Date de publication de la demande: 02.12.2020
(73) Titulaire: NOVARES France, 92140 Clamart (FR)
(72) Inventeur: REICHHELD, Frédérick, 06500 MENTON (FR); REVEL, Anthony, 01800 VILLIEU LOYES MOLLON (FR); MARTIN, Edith, 01250 CEYZERIAT (FR)
(74) Mandataire: Germain Maureau
(86) Numéro de dépôt international: PCT/FR2019/050167
(87) Numéro de publication internationale: WO 2019/145651

(56) Documents cités:
- EP-A1- 3 132 976
- EP-A2- 0 812 729
- DE-A1-102004 031 224
- DE-U1-202006 002 513
- US-A1- 2017 334 344

## Description

La présente invention concerne un dispositif de support de barres de toit.

Pour augmenter la capacité de chargement d'un véhicule, il est connu d'utiliser le toit comme surface d'arrimage.

Pour cela, il est connu d'équiper le toit d'un véhicule de dispositif de fixation sur lesquels des barres de toit généralement au nombre de deux sont fixées ou viennent se fixer. Selon les cas, les barres de toit sont fixes ou sont amovibles; dans ce dernier cas de figure, les barres de toit présentent des pinces qui viennent assurer leur fixation sur le véhicule.

De façon générale, la fonction de portage sur le toit d'un véhicule n'a pas connu d'évolution majeure et dans ce contexte technique un but de l'invention est d'apporter à l'utilisateur des informations supplémentaires dans le but d'un usage plus sécurisé de son véhicule. Le document EP 0 812 729 A2 divulgue un dispositif de support d'une barre de toit conforme au préambule de la revendication 1.

Selon un premier aspect, l'invention concerne un dispositif de support d'une barre de toit de support destiné à recevoir un organe de fixation d'une barre de toit pour le transport d'une charge sur un toit d'un véhicule, présentant les caractéristiques de la revendication 1.

Le dispositif selon l'invention peut comprendre les caractéristiques suivantes prises de manière isolée ou combinée :
- le dispositif comprend :
   - une platine supportant des moyens de mesure de flexion, ladite platine comprenant :
      ▪ une partie proximale insérée dans le pied de fixation comprenant des moyens de fixation sur le toit,
      ▪ une partie distale insérée dans le tronçon central située dans un plan parallèle à la partie proximale et en en élévation par rapport à celle-ci,
      ▪ une partie intermédiaire) qui relie la partie proximale à la partie distale,
   - un capot inférieur possédant (i) une jupe périphérique ceinturant la partie proximale, la partie intermédiaire et la partie distale et (ii) un retour de matière formant le pied d'appui positionné à l'aplomb de l'extrémité libre de la partie distale, le pied d'appui formant un entretoisage entre l'extrémité libre de la partie distale de la platine et le toit du véhicule et délimitant une arche avec la partie distale l'arche formant un passage pour un organe de fixation d'une barre de toit,
   - un capot supérieur fixé sur le capot inférieur et couvrant la platine.
- le pied d'appui est en surplomb du toit lorsque le dispositif n'est pas sollicité par une charge.
- le pied d'appui est en applique sur le toit lorsque le dispositif n'est pas sollicité par une charge.
- le dispositif comprend une jauge de déformation placée sur la platine destinée à mesurer une flexion de celle-ci lors d'une charge exercée sur le dispositif.
- la jauge de déformation est positionnée sur la partie distale de la platine.
- la platine présente un coefficient d'élasticité supérieur à celui du capot inférieur et du capot supérieur.
- le dispositif comprend des moyens d'éclairage.
- les moyens d'éclairage comprennent au moins une LED reliée à un guide de lumière interposée entre le capot inférieur et le capot supérieur.

Selon un deuxième aspect, l'invention concerne un véhicule automobile présentant un toit caractérisé comprenant quatre dispositifs de support teLs que décrits précédemment disposés deux à deux.

Selon un troisième aspect, l'invention concerne un procédé de contrôle d'une charge d'un véhicule comprenant les étapes consistant à :
- fournir quatre dispositif de support sur lesquels sont fixées deux barres de toit ;
- placer une charge sur les deux barres de toits ;
- émettre un signal lorsque la charge dépasse une valeur prédéterminée de seuil de charge.

De préférence, le signal est un signal visuel.

Pour sa bonne compréhension, l'invention est décrite en référence aux dessins ci-annexés représentant, à titre d'exemple non limitatif, une forme de réalisation d'un dispositif de support d'une charge selon l'invention.

Figure 1 est une vue en perspective du dispositif de support fixé sur un toit d'un véhicule,

Figure 2 est une vue en perspective partiellement éclatée du dispositif de support de la figure 1,

Figure 3 est une vue en perspective d'une platine disposée à l'intérieur du dispositif.

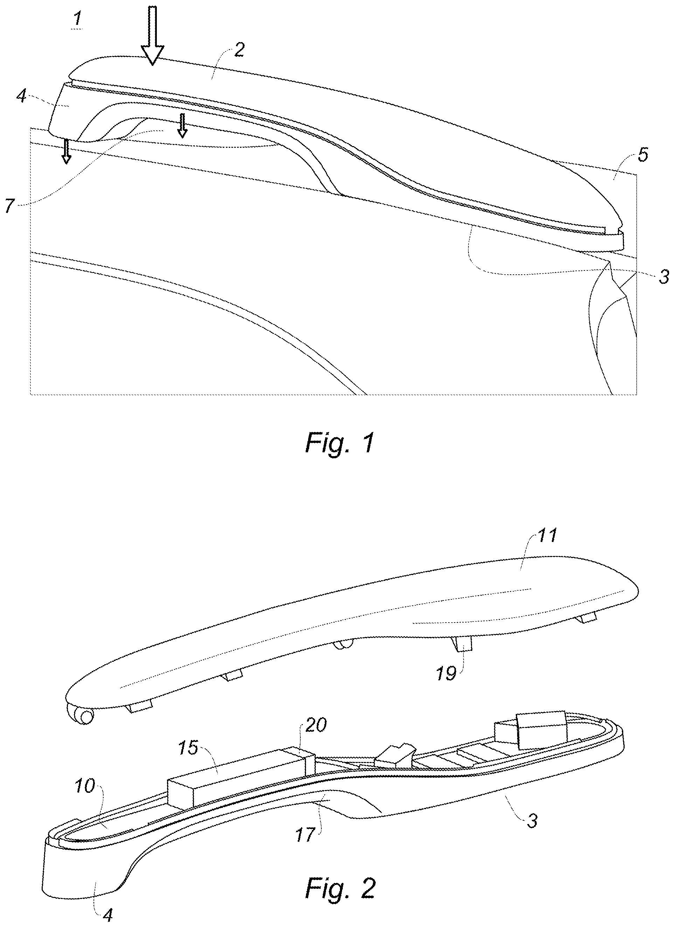

En se référant tout d'abord à la figure 1, le dispositif de support 1 comprend essentiellement trois sous parties fonctionnelles, à savoir un tronçon central 2 prolongé à ses deux extrémités, par des pieds 3 et 4 qui forment deux liaisons de natures différentes avec un toit 5 de véhicule.

Ainsi, le tronçon central 2 présente, à l'une de ses extrémités, un pied de fixation 3 qui est destiné à assurer une fixation rigide du dispositif de support 1 sur le toit 5 du véhicule et, à sa seconde extrémité, le tronçon central 2 est prolongé par un pied d'appui 4. Contrairement au pied de fixation 3, le pied d'appui 4 vient simplement tangenter la surface du toit 5 et ne forme donc pas une fixation sur le toit 5. Le pied d'appui 4 peut ainsi être en léger surplomb du toit 5.

Le dispositif de support 1 forme ainsi une arche 7 et une pince d'une barre de toit (non représentée) peut être fixée sur le tronçon central 2.

Un véhicule peut être équipé de quatre dispositifs de support 1 disposés transversalement deux à deux de manière à recevoir deux barres de toit 5 écartées l'une de l'autre sur lesquelles peut être fixé tout type de charges tels qu'un coffre de toit, un dispositif porte vélo, une galerie etc.

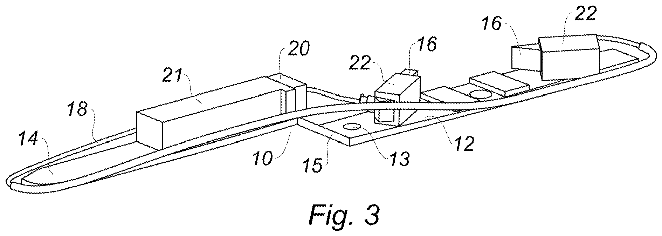

Les figures 2 et 3 permettent d'apprécier la structure du dispositif de support 1.

Ainsi, on peut voir que le dispositif de support 1 comprend, dans l'exemple représenté, trois éléments superposés, à savoir un capot inférieur 9 à l'intérieur duquel est disposée une platine 10 et un capot supérieur 11 qui vient encapsuler la platine 10.

En référence à la figure 3, on peut voir que la platine 10 présente une partie proximale 12 qui comprend des moyens de fixation au toit 5 du véhicule.

En pratique, la platine 10 peut être dotée d'ouvertures 13 dans lesquelles sont engagés des organes de fixation tels que rivets, vis, etc.

La partie proximale 12 de la platine 10 est donc rigidement fixée sur le toit 5.

La platine 10 présente de plus une partie distale 14 qui est située dans un plan parallèle à la partie proximale 12 en étant surélevée par rapport à la partie proximale 12. La jonction entre la partie proximale 12 et la partie distale 14 est réalisée par une partie intermédiaire 15 d'orientation oblique qui autorise une flexion de la partie distale 14 par rapport à la partie proximale 12.

La platine 10 est réalisée de préférence dans un métal de manière à posséder des caractéristiques mécaniques permettant une reprise des efforts vers le toit 5 du véhicule.

Comme le montre la figure 3, la platine 10 embarque plusieurs composants.

Dans l'exemple représenté sur les figures, la platine 10 est ainsi équipée d'une (ou de plusieurs jauges) de déformation 20 qui, de façon usuelle, mesurent les déformations de faibles amplitudes que subit le dispositif de support 1 et, par construction, la platine 10. La jauge de déformation 20 est de préférence appliquée par collage sur la platine 10 ; la jauge de déformation 20 est elle-même reliée à un module électronique 21 qui amplifie le signal électrique qui est généré lors des déformations de la platine 10. Le module électronique est connecté au bus de multiplexage qui est présent de manière usuelle dans le véhicule.

Dans l'exemple illustré à la figure 3, la platine 10 est de plus dotée de moyens d'éclairage.

Comme cela apparaît sur la figure 3, il est prévu que la platine 10, dans sa partie proximale 12, reçoive des sources d'éclairage qui, dans le cas présent, comprennent deux LEDs 16 associées à un radiateur 22. Les LEDs 16 sont chacune reliées à un guide de lumière 18 qui peut être composé de fibres optiques. Les LEDs 16 sont également reliées au bus de multiplexage du véhicule pour en permettre la commande.

La platine 10 est encapsulée entre le capot inférieur 9 et le capot supérieur 11.

Le capot inférieur 9 présente une jupe 17 qui ceinture les parties proximale, intermédiaire et distale de la platine 10. Au niveau de l'extrémité libre de la partie distale 14, le capot inférieur 9 forme le pied avant 4 par un retour de la matière de la jupe 17. Le capot inférieur 9 comprend des moyens d'appui tels que épaulements, nervures ou bossages qui sont venus de matière avec la face interne de la jupe 17, sur lesquels la platine 10 repose.

Le capot supérieur 11 vient se fixer par une série de pattes de fixation 19 de manière à s'encliqueter dans le capot inférieur 9 en enserrant le guide de lumière 18.

En utilisation, un utilisateur souhaitant effectuer un transport de charge sur son véhicule, peut donc approcher une barre de toit sur le véhicule et fixer les pinces de barres de toit sur le tronçon central 2 du dispositif de support 1.

En pratique, le véhicule est doté de quatre dispositifs de support sur lesquels sont fixés deux barres de toit parallèles.

Le dispositif de support 1 reçoit donc une barre de toit 5 et en assure le support de manière fixe.

La charge d'un porte-vélo, d'un coffre de toit ou autre que l'utilisateur place sur le véhicule, est mesurée par la jauge de déformation 20 disposée à l'intérieur des quatre dispositifs de support 1 que l'on peut trouver sur un véhicule.

En effet, la charge qui est transférée par les barres de toit 5 sur les dispositifs de support 1 se traduit par une flexion du tronçon central 2 ; la flexion qui est proportionnelle à la charge appliquée sur les dispositifs de support 1 est mesurée par les jauges de déformation 14.

La structure particulière du dispositif de support 1 qui présente un pied fixe 3 et un pied d'appui 4 qui est en surplomb de la sur la surface du toit a pour effet que lorsqu'une charge est posée sur une barre de toit et la charge est transmise au tronçon central 2 ; sous l'effet de la charge, la platine 10 qui est encapsulée dans le dispositif de support 1 fléchit d'une manière contrôlée car le pied d'appui 4 se rapproche de la surface du toit, étant précisé que la course de déplacement du pied d'appui se compte en millimètre.

Les signaux mesurés par la jauge de déformation 14 sont traités par l'électronique du véhicule.

Selon la charge, un signal est envoyé à l'utilisateur. Ce signal prend dans l'exemple illustré la forme d'un éclairage des guides de lumière 18 que l'on trouve au niveau de chaque dispositif de support 1.

En cas, de charge normale, il peut être prévu un éclairage par les LEDs d'une première couleur, telle que, par exemple la couleur verte.

Lorsque la charge s'approche du seuil de surcharge, les LEDs sous le contrôle de l'électronique du véhicule qui est informé de la charge par le signal envoyé par la jauge de déformation 20, peuvent émettre une deuxième couleur telle que, par exemple, la couleur orange.

Lorsque la charge excède le seuil de charge, les LEDs peuvent émettre une troisième couleur telle que, par exemple, la couleur rouge indiquant ainsi à l'utilisateur une anomalie.

Le signal visuel du dépassement du seuil de charge peut être couplé à un signal sonore par la mise en fonctionnement de l'avertisseur du véhicule. Il peut également être envisagé que le véhicule soit placé dans un mode de non fonctionnement ou dans un mode de fonctionnement dégradé avec, par exemple, une limite électronique de vitesse.

Bien entendu, l'invention n'est pas limitée à la forme de réalisation décrite ci-dessus à titre d'exemple non limitatif. Ainsi, dans une variante, les barres de toit sont reliées de manière fixe aux dispositifs de support et sont à demeure sur le toit du véhicule. Dans une autre variante, le pied d'appui 4 est en applique sur la surface du toit c'est-à-dire que le pied d'appui 4 repose sur le toit sans y être fixé. Dans cette variante, le pied d'appui peut glisser sur une courte course lorsque le dispositif de support est soumis à une charge. Dans une autre variante, la jauge de contrainte pourrait être fixée sur la partie proximale ou sur la partie distale de la platine.

## Revendications

1. Dispositif de support d'une barre de toit de support destiné à recevoir un organe de fixation d'une barre de toit pour le transport d'une charge sur un toit d'un véhicule, le dispositif comprenant un tronçon central (2) sur lequel peut se fixer de manière fixe ou amovible une barre de toit, ledit tronçon (2) étant prolongé, à l'une de ses extrémités, par un pied de fixation (3) destiné à être rigidement fixé sur le toit dudit véhicule et, à sa seconde extrémité, par un second pied, le dispositif comprenant de plus des moyens de mesure de flexion lorsqu'il est soumis à une charge appliquée sur le tronçon central (2), **caractérisé en ce que** le second pied est un pied d'appui (4) dépourvu de moyens de liaison par rapport au toit.

2. Dispositif selon la revendication 1, **caractérisé en ce que** le dispositif comprend :
- une platine (10) supportant des moyens de mesure de flexion, ladite platine (10) comprenant
∘ une partie proximale (12) insérée dans le pied de fixation (3) comprenant des moyens de fixation sur le toit,
∘ une partie distale (14) insérée dans le tronçon central (2) située dans un plan parallèle à la partie proximale (12) et en en élévation par rapport à celle-ci,
∘ une partie intermédiaire (15) qui relie la partie proximale (12) à la partie distale (14),
- un capot inférieur (9) possédant (i) une jupe périphérique (17) ceinturant la partie proximale (12), la partie intermédiaire (15) et la partie distale (14) et (ii) un retour de matière formant le pied d'appui (4) positionné à l'aplomb de l'extrémité libre de la partie distale (14), le pied d'appui (4) formant un entretoisage entre l'extrémité libre de la partie distale (14) de la platine (10) et le toit du véhicule et délimitant une arche (7) avec la partie distale 14, l'arche (7) formant un passage pour un organe de fixation d'une barre de toit,
- un capot supérieur (11) fixé sur le capot inférieur (9) et couvrant la platine (10).

3. Dispositif selon l'une des revendications 1 à 2, **caractérisé en ce que** le pied d'appui (4) est en surplomb du toit lorsque le dispositif n'est pas sollicité par une charge.

4. Dispositif selon l'une des revendications 1 à 2, **caractérisé en ce que** le pied d'appui (4) est en applique sur le toit lorsque le dispositif n'est pas sollicité par une charge.

5. Dispositif selon l'une des revendications 2 à 4, **caractérisé en ce que** le dispositif comprend une jauge de déformation (20) placée sur la platine (10) destinée à mesurer une flexion de celle-ci lors d'une charge exercée sur le dispositif.

6. Dispositif selon la revendication 5, **caractérisé en ce que** la jauge de déformation (20) est positionnée sur la partie distale (14) de la platine (10).

7. Dispositif selon l'une des revendications 1 à 6, **caractérisé en ce que** la platine (10) présente un coefficient d'élasticité supérieur à celui du capot inférieur et du capot supérieur.

8. Dispositif selon l'une des revendications 1 à 7, **caractérisé en ce que** le dispositif comprend des moyens d'éclairage.

9. Dispositif selon la revendication 8, **caractérisé en ce que** les moyens d'éclairage comprennent au moins une LED reliée à un guide de lumière interposée entre le capot inférieur et le capot supérieur.

10. Véhicule automobile présentant un toit **caractérisé en ce qu'**il comprend quatre dispositifs de support selon l'une des revendications 1 à 9 disposés deux à deux.

11. Procédé de contrôle d'une charge d'un véhicule **caractérisé en ce qu'**il comprend les étapes consistant à :
- fournir quatre dispositif de support (1) selon l'une des revendications 1 à 9 sur lesquels sont fixées deux barres de toit ;
- placer une charge sur les deux barres de toits ;
- émettre un signal lorsque la charge dépasse une valeur prédéterminée de seuil de charge.

12. Procédé de contrôle selon la revendication 11 lorsqu'elle dépend de la revendication 8, **caractérisé en ce que** le signal est un signal visuel.

## Patentansprüche

1. Haltevorrichtung eines Haltedachträgers, die dazu bestimmt ist, ein Befestigungsorgan für einen Dachträger für den Transport einer Last auf einem Dach eines Fahrzeugs aufzunehmen, wobei die Vorrichtung einen mittleren Teilabschnitt (2) umfasst, auf dem ein Dachträger fest oder abnehmbar befestigt werden kann, wobei der Teilabschnitt (2) an einem seiner Enden durch einen Befestigungsfuß (3) verlängert ist, der dazu bestimmt ist, an dem Dach des Fahrzeugs starr befestigt zu werden, und an seinem zweiten Ende durch einen zweiten Fuß, wobei die Vorrichtung weiter Mittel zum Messen einer Biegung umfasst, wenn sie einer Last ausgesetzt ist, die auf den mittleren Teilabschnitt (2) angewendet wird, **dadurch gekennzeichnet, dass** der zweite Fuß ein Auflagefuß (4) ist, der mit keinen Verbindungsmitteln in Bezug auf das Dach versehen ist.

2. Vorrichtung nach Anspruch 1, **dadurch gekennzeichnet, dass** die Vorrichtung umfasst:
- eine Platine (10), die Mittel zum Messen einer Biegung trägt, wobei die Platine (10) umfasst
° einen proximalen Teil (12), der in den Befestigungsfuß (3) eingeführt ist, der Mittel zum Befestigen auf dem Dach umfasst,
° einen distalen Teil (14), der in den mittleren Teilabschnitt (2) eingeführt ist, sich in einer Ebene parallel zum proximalen Teil (12), und in Bezug auf dieselbe erhöht befindet,
° einen Zwischenteil (15), der den proximalen Teil (12) mit dem distalen Teil (14) verbindet,
- eine untere Abdeckung (9), die (i) eine umlaufende Schürze (17) besitzt, die den proximalen Teil (12), den Zwischenteil (15) und den distalen Teil (14) umgibt, und (ii) eine Materialrückführung, die den Auflagefuß (4) bildet, die senkrecht zum freien Ende des distalen Teils (14) positioniert ist, wobei der Auflagefuß (4) einen Abstandhalter zwischen dem freien Ende des distalen Teils (14) der Platine (10) und dem Dach des Fahrzeugs bildet, und einen Bogen (7) mit dem distalen Teil 14 begrenzt, wobei der Bogen (7) einen Durchlass für ein Befestigungsorgan eines Dachträgers bildet,
- eine obere Abdeckung (11), die an der unteren Abdeckung (9) befestigt ist, und die Platine (10) abdeckt.

3. Vorrichtung nach einem der Ansprüche 1 bis 2, **dadurch gekennzeichnet, dass** der Auflagefuß (4) über dem Dach überhängend ist, wenn die Vorrichtung von keiner Last belastet wird.

4. Vorrichtung nach einem der Ansprüche 1 bis 2, **dadurch gekennzeichnet, dass** der Auflagefuß (4) an dem Dach anliegt, wenn die Vorrichtung von keiner Last belastet wird.

5. Vorrichtung nach einem der Ansprüche 2 bis 4, **dadurch gekennzeichnet, dass** die Vorrichtung einen Dehnungsmesser (20) umfasst, der auf der Platine (10) platziert ist, der dazu bestimmt ist, eine Biegung derselben zu messen, wenn eine Last auf die Vorrichtung ausgeübt wird.

6. Vorrichtung nach Anspruch 5, **dadurch gekennzeichnet, dass** der Dehnungsmesser (20) auf dem distalen Teil (14) der Platine (10) positioniert ist.

7. Vorrichtung nach einem der Ansprüche 1 bis 6, **dadurch gekennzeichnet, dass** die Platine (10) einen Elastizitätskoeffizienten größer als jenen der unteren Abdeckung und der oberen Abdeckung aufweist.

8. Vorrichtung nach einem der Ansprüche 1 bis 7, **dadurch gekennzeichnet, dass** die Vorrichtung Beleuchtungsmittel umfasst.

9. Vorrichtung nach Anspruch 8, **dadurch gekennzeichnet, dass** die Beleuchtungsmittel mindestens eine LED umfassen, die mit einem Lichtleiter verbunden ist, der zwischen der unteren Abdeckung und der oberen Abdeckung eingesetzt ist.

10. Kraftfahrzeug, das ein Dach aufweist, das **dadurch gekennzeichnet ist, dass** es vier Haltevorrichtungen nach einem der Ansprüche 1 bis 9 umfasst, die paarweise angeordnet sind.

11. Verfahren zur Kontrolle einer Last eines Fahrzeugs, **dadurch gekennzeichnet, dass** es die Schritte umfasst, bestehend aus:
- dem Bereitstellen von vier Haltevorrichtungen (1) nach einem der Ansprüche 1 bis 9, auf denen zwei Dachträger befestigt sind;
- Platzieren einer Last auf den beiden Dachträgern;
- Senden eines Signals, wenn die Last einen vorbestimmten Lastschwellenwert überschreitet.

12. Verfahren zur Kontrolle nach Anspruch 11, wenn von Anspruch 8 abhängig, **dadurch gekennzeichnet, dass** das Signal ein optisches Signal ist.

## Claims

1. A device for supporting a support roof bar intended to receive a member for fastening a roof bar for transporting a load on a roof of a vehicle, the device comprising a central section (2) to which a roof bar can be fixedly or detachably fastened, said section (2) being extended, at one of its ends, by a fastening foot (3) intended to be rigidly fastened to the roof of said vehicle and, at its second end, by a second foot, the device further comprising means for measuring bending when it is subjected to a load applied to the central section (2), **characterized in that** the second foot is a bearing foot (4) devoid of means for connection relative to the roof.

2. The device according to claim 1, **characterized in that** the device comprises:
- a plate (10) supporting bending measuring means, said plate (10) comprising
o a proximal part (12) inserted into the fastening foot (3) comprising means for fastening to the roof,
o a distal part (14) inserted into the central section (2) located in a plane parallel to the proximal part (12) and in elevation with respect to the latter,
o an intermediate part (15) which connects the proximal part (12) to the distal part (14),
- a lower cover (9) having (i) a peripheral skirt (17) surrounding the proximal part (12), the intermediate part (15) and the distal part (14) and (ii) a return of material forming the bearing foot (4) positioned directly above the free end of the distal part (14), the bearing foot (4) forming a bracing between the free end of the distal part (14) of the plate (10) and the roof of the vehicle and delimiting an arch (7) with the distal part 14, the arch (7) forming a passage for a member for fastening a roof bar,
- an upper cover (11) fastened to the lower cover (9) and covering the plate (10).

3. The device according to any of claims 1 to 2, **characterized in that** the bearing foot (4) is overhanging the roof when the device is not biased by a load.

4. The device according to any of claims 1 to 2, **characterized in that** the bearing foot (4) is surface-mounted on the roof when the device is not biased by a load.

5. The device according to any of claims 2 to 4, **characterized in that** the device comprises a strain gauge (20) placed on the plate (10) intended to measure a bending of the latter during a load exerted on the device.

6. The device according to claim 5, **characterized in that** the strain gauge (20) is positioned on the distal part (14) of the plate (10).

7. The device according to any of claims 1 to 6, **characterized in that** the plate (10) has a coefficient of elasticity greater than that of the lower cover and the upper cover.

8. The device according to any of claims 1 to 7, **characterized in that** the device comprises lighting means.

9. The device according to claim 8, **characterized in that** the lighting means comprise at least one LED connected to a light guide interposed between the lower cover and the upper cover.

10. A motor vehicle having a roof **characterized in that** it comprises four support devices according to any of claims 1 to 9 arranged in pairs.

11. A method for controlling a load of a vehicle **characterized in that** it comprises the steps consisting in:
- providing four support devices (1) according to any of claims 1 to 9 to which two roof bars are fastened;
- placing a load on the two roof bars;
- emitting a signal when the load exceeds a predetermined load threshold value.

12. The control method according to claim 11 when dependent on claim 8, **characterized in that** the signal is a visual signal.
